**Europäisches Patentamt**

**European Patent Office**

**Office européen des brevets**

(19)

(11) Veröffentlichungsnummer: **0 463 480 B1**

(12) # EUROPÄISCHE PATENTSCHRIFT

(45) Veröffentlichungstag der Patentschrift: **04.01.95**

(51) Int. Cl.[6]: **C03B 37/027**, C03B 23/043

(21) Anmeldenummer: **91109653.5**

(22) Anmeldetag: **12.06.91**

(54) **Verfahren und Vorrichtung zur Herstellung einer Vorform für Glasfaser-Lichtwellenleiter.**

(30) Priorität: **23.06.90 DE 4020101**

(43) Veröffentlichungstag der Anmeldung:
**02.01.92 Patentblatt 92/01**

(45) Bekanntmachung des Hinweises auf die
Patenterteilung:
**04.01.95 Patentblatt 95/01**

(84) Benannte Vertragsstaaten:
**CH DE DK GB IT LI NL**

(73) Patentinhaber: **kabelmetal electro GmbH
Postfach 260
D-30002 Hannover (DE)**

(72) Erfinder: **Keim, Norbert, Dipl.-Ing.
Mergenthalerstrasse 21
W-7120 Bietigheim-Biss. (DE)**
Erfinder: **Wittmann, Manfred, Dr.
Droste 15
W-7000 Stuttgart (DE)**

## Beschreibung

Die vorliegende Erfindung betrifft ein Verfahren zur Herstellung einer Vorform für Glasfaser-Lichtwellenleiter mit einem Kern und einem Mantel, bei dem das Kernglasmaterial durch chemische Niederschlagung aus der Dampfphase auf der Innenwand eines Glasrohres aufgebracht, das innen beschichtete Glasrohr durch Temperaturbehandlung zum Kollabieren gebracht und diese Vorform schließlich zur Glasfaser ausgezogen wird. Die Temperaturbehandlung zum Kollabieren erfolgt längs des behandelten Glasrohrabschnittes entsprechend einem kuppenförmigen Temperaturprofil mit einem oberen Bereich maximaler Glastemperatur (heiße Zone), welcher obere Bereich ein Teil des sich oberhalb der Glaserweichungstemperatur (weiche Zone) befindlichen Teils des Temperaturprofils ist. Die vorliegende Erfindung betrifft auch Vorrichtungen zur Durchführung des Kollabiervorganges mit einem längs des zu kollabierenden, innenbeschichteten Glasrohres geführten Gasbrenner.

Solche Innenbeschichtungsverfahren, auch als MCVD-Verfahren bekannt, sind seit langem üblich. Hierbei wird eine geeignete Wärmequelle innerhalb der Beschichtungs- bzw. Kollabieranlage ein oder mehrere Male in Längsrichtung am Glasrohr entlang geführt, wobei die Beschichtung mit der entsprechenden Temperaturbehandlung, in der Regel nur jeweils in einer Richtung erfolgt. Zur Beschichtung werden Metallhalogenide, z. B. reine oder dotierte Siliziumhalogenide, bei hohen Temperaturen in die entsprechenden Oxide umgesetzt, wobei die chemische Umsetzung sowie der Abscheidungsprozeß praktisch gleichzeitig stattfinden. Zur Innenbeschichtung eines Glasrohres ist auch eine Brenneranordnung bekannt (PCT-WO 80/02020), bei der der hin- und her bewegbare Gasbrenner um die Achse des Glasrohres schwenkbar angeordnet ist. Das vom Brenner erzeugte Temperaturprofil ist hierdurch nicht veränderbar.

Zunehmende Forderungen, die Fertigungsgeschwindigkeit bei der Glasfaserfertigung zu erhöhen und damit zu einer Leistungssteigerung zu kommen, waren bereits Anlaß, die Brennerleistung zu erhöhen, um hierdurch, wie bereits bekannt, zu kürzeren Kollabierzeiten zu kommen. Denn entsprechend der Formel

$$v(r) = \frac{p_a - p_i + \sigma * (\frac{1}{r_a} + \frac{1}{r_i})}{2 * \eta * (\frac{1}{r_a^2} - \frac{1}{r_i^2})} * \frac{1}{r}$$

worin v(r) die Kollabiergeschwindigkeit in Abhängigkeit von Radius r,
$p_a$ der Druck auf der äußeren Oberfläche,
$p_i$ der Druck auf der Innenfläche,
$\sigma$ die Oberflächenspannung,
$r_a$ der äußere Radius und
$r_i$ der innere Radius sowie
$\eta$ die Schmelzenviskosität (Temperatur ° C) ist, fließt das Quarzglas mit zunehmender Erweichung schneller zusammen. Dennoch kann eine Leistungssteigerung in der Praxis nicht erreicht werden, weil die erhaltene Produktqualität zu wünschen übrig läßt. Eine Steigerung der Brennerleistung mit der heute üblichen Brennereinstellung führt nämlich dazu, daß sich die zu kollabierenden Rohre verbiegen, verwerfen oder verdrehen und daher nicht mehr beim Fertigungsprozeß stabil in der Rotationsachse gehalten werden können. Der Kollabierprozeß muß abgebrochen werden, ohne daß das tatsächliche Potential des Brenners ausgeschöpft werden kann.

Ausgehend von diesem Stand der Technik liegt daher der Erfindung die Aufgabe zugrunde, eine Möglichkeit zu finden, die Kollabierzeit zu verringern, ohne daß die Produktqualität in Frage gestellt ist.

Gelöst wird diese Aufgabe gemäß der Erfindung dadurch, daß der Bereich maximaler Glastemperatur ein weitgehend gleichmäßiges Temperaturniveau aufweist mit einer Breite längs des Glasrohrabschnittes, die der Breite des Bereiches Glaserweichungstemperatur angenähert ist. Abweichend vom Stand der Technik legt die Erfindung erstmals eine bestimmte Temperaturverteilung für das Kollabieren fest. Die Erfindung beruht nämlich auf der Erkenntnis, daß für den Kollabierprozeß das gesamte Temperaturprofil oberhalb des Glaserweichungspunktes zu betrachten ist und nicht nur wie bisher durch Messung eines Punktes der heißen Zone (kinetisches Kriterium) die Temperaturverteilung bewertet werden kann. Dabei ist wesentlich, daß die oberen 100 ° C des Temperaturprofils die Kollabiergeschwindigkeit (Kinetik) bestimmen. In axialer Richtung ist für die mechanische Stabilität die Breite der weichen Zone unmittelbar oberhalb der Erweichungstemperatur des z. B. Quarzglases von ca. 1 800 ° C verantwortlich (Stabilitätskriterium). Für einen stabilen Kollabierprozeß darf die vom jeweiligen Außendurchmesser und Wandaufbau des Quarzglas-

2

rohres abhängige Ausdehnung der weichen Zone einen Maximalwert, auch Stabilitätsbreite genannt, nicht überschreiten. Ein gemäß der Erfindung eingestelltes Temperaturprofil führt zu hohen Kollabiergeschwindigkeiten und damit zu hohen Fertigungsgeschwindigkeiten. Verwerfungen und Verbiegungen der Vorform in der heißen Zone sind durch die Vermeidung zackiger Strukturen des Temperaturprofils nicht zu erwarten.

Das Verhältnis von Breite des Bereiches maximaler Glastemperatur zur Breite des Bereiches Glaserweichungstemperatur beträgt in Durchführung der Erfindung 1:4 bis 1:1, vorzugsweise 1:2 bis 1:1. Für den Temperaturverlauf im Bereich der vom Brenner zum Zwecke der Kollabierung vorgesehenen Strecke des Glasrohres führt dies zu einer Verbreiterung der Temperaturprofilkuppe mit hohen örtlichen Temperaturgradienten an den Flanken, so daß hohe Fertigungsgeschwindigkeiten erreicht werden können. So wird die "ideale" Temperaturverteilung beim Kollabieren durch ein Rechteckprofil repräsentiert, bei der die Breite der heißen Zone (Kinetik) auf die Breite der weichen Zone (Stabilitätsbreite) ausgedehnt wird (1:1).

Wie bereits seit langem üblich, erfolgt das Deponieren von aus der Gasphase niedergeschlagenen Schichten an der Innenfläche des Glasrohres sowie das Kollabieren des beschichteten Rohres durch eine Temperaturbehandlung mittels längs des Rohres geführter Gasbrenner oder auch anderer Wärmequellen, wie Elektro- bzw. Plasmaöfen. Um das gemäß der Erfindung vorgeschlagene Temperaturprofil bestmöglichst zu erreichen, wird z. B. an den auf dem Markt erhältlichen Brennern gezielt der Strömungsverlauf gesteuert.

In diesem Fall kann die für die Kinetik entscheidende Erhöhung und Verbreiterung der Temperaturprofilkuppe durch gezielte mechanische und deshalb durchflußmäßige Optimierung des Brenners gemäß der Erfindung unter Einhaltung der Stabilitätsbreite erfolgen. Eine weitere Potentialausschöpfung ist jedoch nur dann gegeben, wenn bei voller Brennerleistung die Randbereiche des Strömungsverlaufes von der Steuerung erfaßt werden.

Diese Steuerung kann beispielsweise dadurch erfolgen, daß die Brennergase von der Oberfläche des Glasrohres abgelenkt werden und damit der Erwärmung in dem jeweiligen Abschnitt des Rohres nicht zur Verfügung stehen. Zu diesem Zweck kann z. B. ein Zusatzgasstrom dienen, der auch ein Schutzgas enthalten kann, und von einer oder mehreren ein- oder beidseitig des Brenners angeordneten Zusatzdüsen, beispielsweise tangential, gegen die Vorform geleitet wird. Eine andere Möglichkeit ist die, die Ablenkung der Brennergase von der Oberfläche des Glasrohres durch Absaugen der Randbereichsströmung sicherzustellen. Zu diesem Zweck haben sich eine oder mehrere, ein- oder beidseitig vom Brenner angeordnete Absaugeinrichtungen als vorteilhaft erwiesen, die in einfachster Weise auch als Absaugplatten ausgerüstet sein können.

Die Erfindung bezieht sich auch auf Vorrichtungen zur Durchführung des obigen Verfahrens, gemäß den Ansprüchen 9 und 10.

Unabhängig von diesen speziellen Maßnahmen sind selbstverständlich auch andere Einrichtungen oder Verfahren möglich, die es erlauben, das Temperaturprofil so zu beeinflussen, daß hohe örtliche Temperaturgradienten in den Flankenbereichen in Annäherung zu einem rechteckförmigen Temperaturprofil führen.

Die Erfindung sei anhand des in den Figuren 1 bis 6 als Ausführungsbeispiel dargestellten Kollabierprozesses näher erläutert.

Fig. 1.    veranschaulicht in schematischer Form den Ablauf eines Kollabierprozesses

Fig. 2    stellt das Temperaturprofil bekannter Brenner dar

Fig. 3    veranschaulicht das Temperaturprofil gemäß der Erfindung

Fig. 4    zeigt den Temperaturverlauf in der heißen Zone bei bekannten Einrichtungen (A) bzw. entsprechend der Erfindung (B, C)

Fig. 5    veranschaulicht die Stabilitätsgrenze in der weichen Zone in Bezug auf zwei Temperaturprofile (E, D)

Fig. 6a    verdeutlicht die erfindungsgemäße Maßnahme mit Zusatzdüsen bei einem sog. Halbschalenbrenner

Fig. 6b    zeigt die gleiche Anordnung in einer Seitenansicht

Fig. 7a    zeigt den üblichen Verlauf der Strömungsgase bei Erwärmung eines Quarzglasrohres

Fig. 7b    verdeutlicht die erfindungsgemäße Maßnahme der Anordnung von Absaugplatten beidseitig neben dem Brenner

Fig. 7c    zeigt die Anordnung nach Fig. 7b in Achsrichtung gesehen

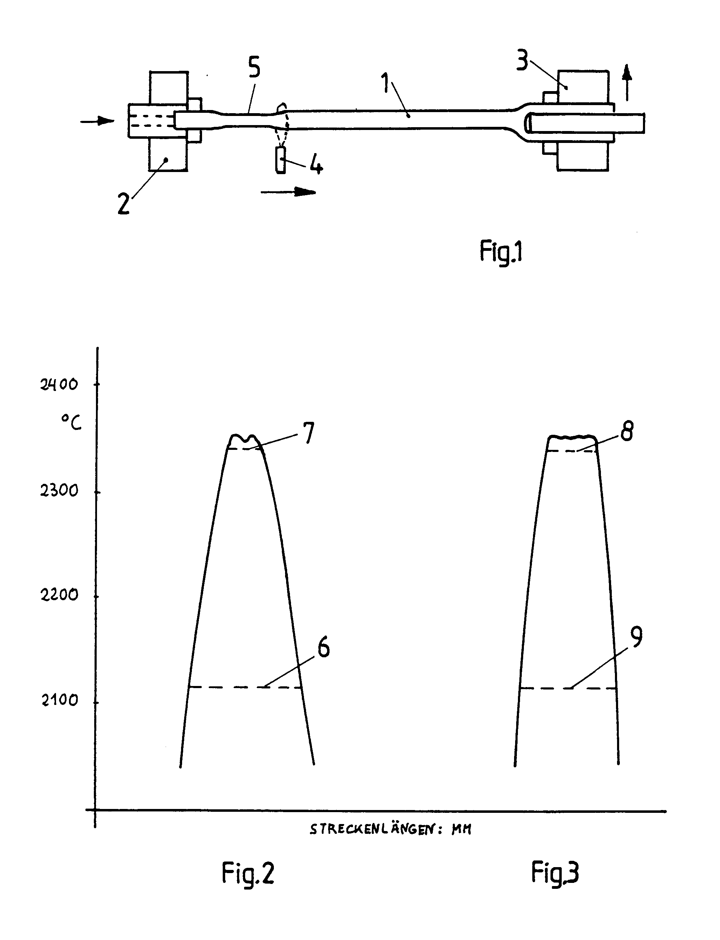

Die Fig. 1 zeigt in schematischer Darstellung den Ablauf eines Kollabierprozesses, bei dem das innen beschichtete Quarzglasrohr 1 beidseitg in den Backenfuttern 2 und 3 eingespannt ist. Innerhalb der Backenfutter ist das Rohr 1 drehbar gelagert und läuft um, während der hier als Wärmequelle dienende Brenner 4 in Pfeilrichtung hin und wieder zurück bewegt wird, um das Kollabieren des Rohres 1, d. h. das Schrumpfen in die endgültige Vorform 5, zu gewährleisten. Die sog. Prozeßgase, d. h. die für den Reaktionsprozeß benötigten Chemikalien werden auf der Seite des Backenfutters 2 in das Quarzglasrohr 1 eingeführt und die nach der Reaktion verbleibenden Restgase werden am anderen Rohrende am Backenfutter 3 wieder aus dem Rohr 1 herausgeführt. Diesen Sachverhalt veranschaulichen die Pfeile am jeweiligen Backenfutter. Wie aus der Fig. 1 weiter ersichtlich, erfolgt das Kollabieren des Glasrohres 1 abschnittweise, wobei die für diese Zwecke benötigte und vom Brenner 4 erzeugte Temperatur das in der Fig. 2 dargestellte Temperaturprofil eines im Handel erhältlichen Brenners aufweist.

Dieses Temperaturprofil ist dadurch gegeben, daß längs des vom Brenner erfaßten Abschnitts des Quarzglasrohres 1 die jeweilige Glastemperatur ermittelt worden ist. Wie ersichtlich, ergibt sich im Temperaturprofil ein unterer Bereich 6, der als sogenannte weiche Zone den Bereich der Glaserweichungstemperatur definiert, während ein oberer Bereich 7 als sogenannte heiße Zone die vom jeweiligen Brenner oder einer anderen Wärmequelle erzeugte maximale Glastemperatur veranschaulicht. Wie diese Fig. weiter verdeutlicht, beträgt die Breite des unteren Bereiches 6 ein Mehrfaches des für den eigentlichen Kollabierprozeß verantwortlichen Bereiches 7.

Wie bereits ausgeführt, führt in dem bekannten, in der Fig. 2 dargestellten Fall die Erhöhung der Brennerleistung nicht zu einer Verbesserung des Kollabierprozesses und schon gar nicht zu einer Verbesserung der Produktqualität, da mit der Leistungssteigerung die Breite der weichen Zone 6 wächst und damit die Stabilität des Quarzglasrohres 1 gefährdet ist. Eine Überschreitung der Stabilitätsbreite macht sich aber in einem Verbiegen oder Verwerfen des zwischen den Backenfuttern 2 und 3 eingespannten Quarzglasrohres bemerkbar.

Abhilfe schafft hier ein entsprechend der Erfindung verwendetes Temperaturprofil, das sich wiederum dadurch ergibt, daß über der vom Brenner oder einer anderen Wärmequelle erfaßten Streckenlänge des jeweiligen Rohrabschnittes die Glastemperatur aufgetragen ist. Fig. 3 zeigt, wie bei einem gemäß der Erfindung entwickelten Brenner die Verbreiterung der heißen Zone 8 erreicht werden kann. Wesentlich hierbei ist, daß mit der Verbreiterung dieser für den eigentlichen Kollabierprozeß maßgeblichen heißen Zone die untere weiche Zone 9, wenn überhaupt, nur unwesentlich verbreitert ist. Diese Annäherung der Breite der heißen Zone 8 an die Breite der weichen Zone 9 führt bei Durchführung des Kollabierprozesses zu hochwertigen Produkten bei wesentlicher Steigerung der Fertigungsgeschwindigkeit.

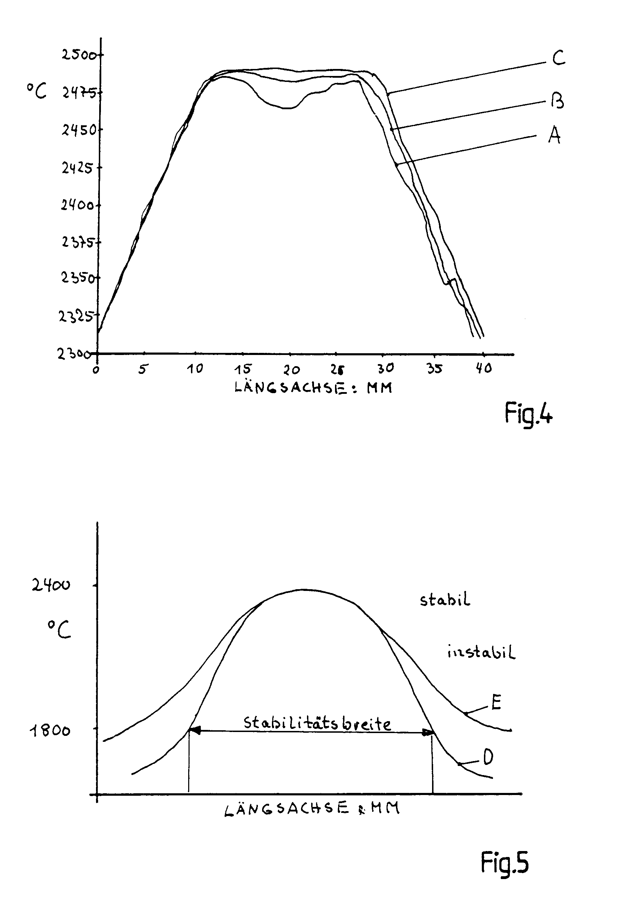

Als Beispiel für die Optimierung des mittleren Bereiches der Kuppe des Temperaturprofiles sei noch auf die Fig. 4 verwiesen, bei der der Temperaturverlauf im Bereich der heißen Zone 8 im vergrößerten Maßstab und für drei unterschiedliche Fälle dargestellt ist. Während der mit A bezeichnete Kurvenverlauf den Verlauf gemäß Vorgabe wiedergibt, der eine Steigerung der Fertigungsleistung durch Steigerung der Brennerleistung nicht zuläßt, zeigt die schrittweise Anhebung und Verbreiterung der heißen Zone entsprechend dem Kurvenverlauf B bzw. C, bei der zusätzlich die maximale Glastemperatur auf einem weitgehend ebenen Temperaturniveau gehalten wird, die Möglichkeit, eine Leistungssteigerung bei der Herstellung von Vorformen für die Glasfasertechnik bei gleichzeitiger Verbesserung der Produktqualität herbeizuführen, ohne daß die Breite der weichen Zone zunimmt. Im dargestellten Ausführungsbeispiel ergibt sich eine Verkürzung der Kollabierzeit bei Einstellung des Temperaturprofiles C gegenüber A um 20 %.

In Fig. 5 sind noch einmal zwei Temperaturprofile D und E dargestellt, die verdeutlichen, daß es für die Erfindung darauf ankommt, im Bereich maximaler Glastemperatur ein möglichst gleichmäßiges Temperaturniveau zu halten, das aber auf der anderen Seite eine Verbreiterung der heißen Zone in Richtung der Vorformachse nicht automatisch auch eine Verbreiterung der weichen Zone in der gleichen Richtung einschließen darf. Die Breite der weichen Zone, in der Fig. 5 auch als Stabilitätsbreite bezeichnet, darf, bezogen auf die äußeren Abmessungen des für die Vorform vorgesehenen Quarzglasrohres, bestimmte Werte nicht überschreiten, da sonst Gefahr besteht, daß die Vorform in den instabilen Zustand gelangt und damit die erwähnten mechanischen Schwierigkeiten, wie Verbiegungen und Verwerfungen, auftreten. Ein solcher instabiler Zustand würde sich im Falle des Temperaturprofiles nach E ergeben.

Für das Innenbeschichten und das Kollabieren von Glasrohren stehen als Wärmequelle z. B. die unterschiedlichsten Brennertypen zur Verfügung. Geeignet sind z. B. Brenner, die als sogenannte Halbschalenringbrenner ausgeführt sind, Vollringbrenner mit/ohne radialen Schutzschleiern sowie sogenannte Freistrahlbrenner, bei denen der Sauerstoff mit hoher Geschwindigkeit aus den einzelnen Düsen der Brennerköpfe austritt. Die Brennerköpfe, aber auch die Düsen, können jeweils drehbar, schwenkbar und in ihrem Abstand zueinander veränderbar sein, alle Brenner müssen jedoch, unabhängig von ihrer jeweiligen Bauart, in ihren Einstellmöglichkeiten für die Anwendung bei der Beschichtung und Kollabierung von Glasrohren für einen Herstellprozeß fest eingestellt werden. Obwohl die Betriebsweise dieser unterschiedlich aufgebauten Brenner grundsätzlich für die jeweilige Anwendung durch die Einstellung des Abstandes sowie der Ausrichtung der Düsen zum Glasrohr optimiert werden kann, findet in Unkenntnis der Temperaturprofilbewertung nur eine unzureichende Ausnutzung der Brennertechnologie statt.

Ausgehend von diesem Stand der Technik sieht die Erfindung eine Bewertung des Temperaturprofils in zwei Zonen vor. Während die heiße Zone im Kuppenbereich der Temperaturverteilung für die Kinetik des Kollabiervorganges verantwortlich zeichnet, ist die Breite des Temperaturprofils im Bereich des Glaserweichungspunktes für die Stabilität des Kollabierprozesses entscheidend. Durch diese grundlegende Erkenntis ergeben sich erstmalig klare, quantitativ faßbare und reproduzierbare Designvorgaben für neue Brenner (Rechteckprofil) und Steuerungsmaßnahmen für das Brennersystem.

Während Fig. 3 die erfolgreiche Umsetzung des Temperaturprofildesigns bei der Entwicklung eines neuen Brenners dokumentiert, zeigt Fig. 4, wie unter Einhaltung der empirischen, für den vorliegenden Vorform-Herstellprozeß ermittelten, Stabilitätsbreite die maximale Kollabierleistung eines Standardbrenners erreicht werden konnte, wobei in diesem Falle Düsenpositionierung und Durchsatzverhältnisse als entscheidende Optimierungsparameter zur Geltung kamen.

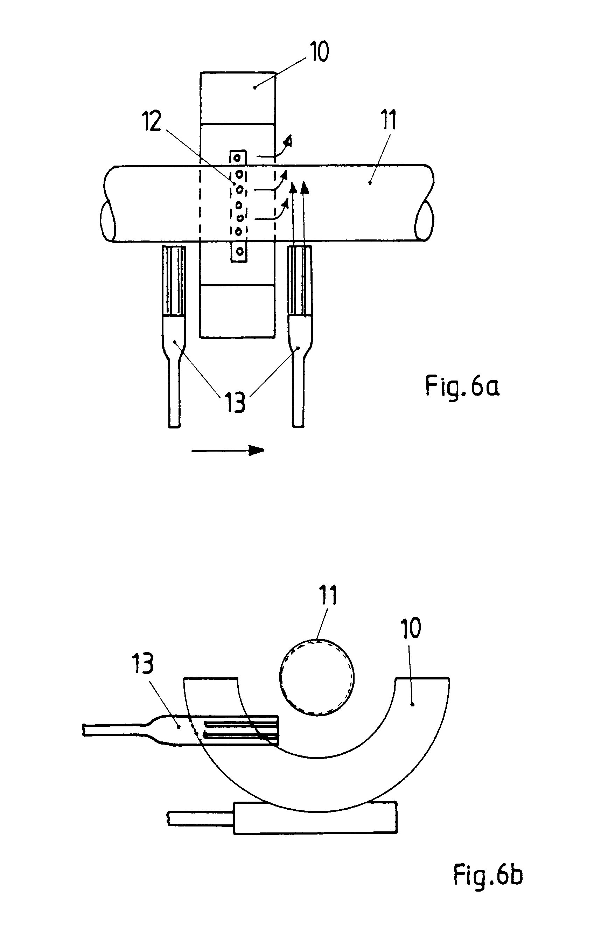

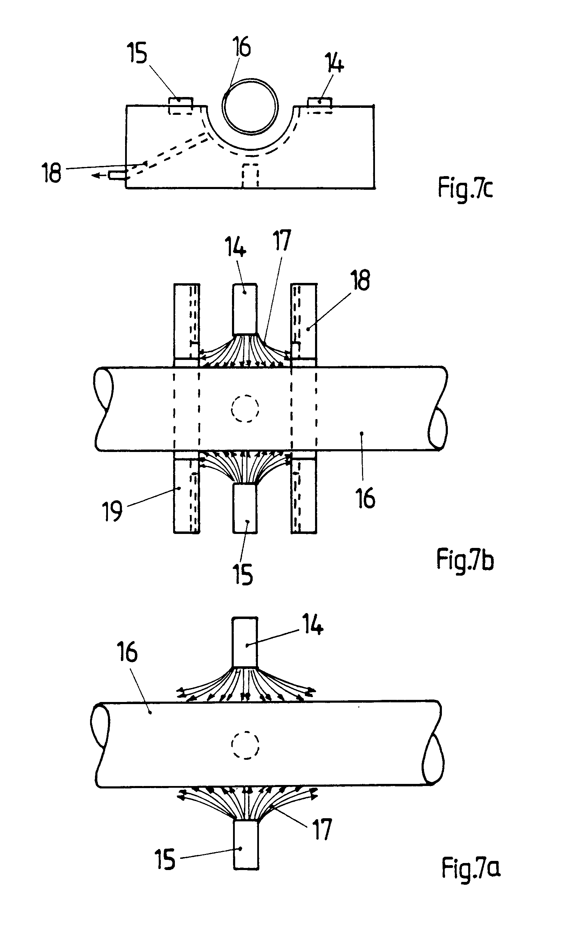

Die Erzielung höherer Temperaturgradienten im Flankenbereich durch entsprechende konstruktive Maßnahmen ist in den Anwendungsbeispielen von Fig. 6 und 7 dargestellt.

Die Fig. 6 zeigt in einer Draufsicht (Fig. 6 a) und in einer Seitenansicht (Fig. 6b) die erfindungsgemäße Maßnahme bei einem Halbschalenbrenner 10, der während des Kollabierens des beschichteten Quarzglasrohres 11, das entsprechend dem Ausführungsbeispiel nach der Fig. 1 an den Enden fest aber drehbar eingespannt ist, in Pfeilrichtung bewegt wird. Die Düsenanordnung ist mit 12 bezeichnet, wie durch Pfeile angedeutet, treten aus diesen Düsen die Brenngase mit hoher Geschwindigkeit aus. Beim Auftreffen der Brennergase auf die Oberfläche des Quarzglasrohres 11 werden diese insbesondere in den Seitenbereichen mehr oder weniger stark abgelenkt und führen so zu einem Temperaturprofil in dem Bereich des zu erwärmenden Rohrabschnittes mit verhältnismäßig flachen Temperaturgradienten zumindest im unteren Temperaturbereich. Da dieser Effekt sich noch gravierender bemerkbar macht, wenn durch Erhöhung der Brennerleistung der Kollabiervorgang z. B. beschleunigt werden soll, und somit Gefahr besteht, daß die Stabilitätsgrenze in der weichen Zone überschritten wird, sieht die Erfindung Hilfsdüsen 13 vor, auch als Tangentialverdränger bezeichnet, die z. B. mit einem Schutzgas gespeist werden und aufgrund ihrer Blaswirkung, wie in der Fig. 6a dargestellt, zu einer Umlenkung der aus dem Brenner 12 austretenden Gase führen. Tatsächlich bedeutet dies, daß die, bezogen auf das Rohr 11, axial austretende Flammenströmung durch den tangential gerichteten Hilfsgasstrom verdrängt wird. Damit ist sichergestellt, daß die unerwünschte Erwärmung des Rohres 11 im betrachteten Bereich außerhalb der heißen Zone praktisch rückwirkungsfrei auf das Flammenzentrum unterbunden und damit ein steiler Temperaturgradient erzeugt wird, sowie die Breite der heißen Zone entsprechend ausgedehnt werden kann.

Zu einem beschleunigten Kollabierprozeß führt auch die Anordnung, wie sie in der Fig. 7 dargestellt ist. Wie aus der Fig. 7a ersichtlich, sind die aus den Brennerköpfen 14 und 15 austretenden Gase gegen das Quarzglasrohr 16 gerichtet, um es entsprechend für die Innenbeschichtung oder den anschließenden Kollabierprozeß vorzubereiten. Wie die Strömungslinien erkennen lassen, erfolgt eine z. T. erhebliche Ablenkung der Strömungslinien der Brennergase 17 für das längs des bestrahlten Rohrabschnittes ermittelte Temperaturprofil, dies bedeutet flach ansteigende bzw. abfallende Flanken. Um diese unerwünschten Eigenschaften zu vermeiden, die sich insbesondere bei der Steigerung der Brennerleistung in einer mangelnden Stabilität des Quarzglasrohres 16 bemerkbar machen, sind, wie die Fig. 7b und 7c erkennen lassen, vor und hinter den Brennerköpfen 14 und 15 Absaugplatten 18 und 19 angeordnet, die die Randbereiche der vom Brenner bestrahlten Zone des Rohres 16 begrenzen und damit in diesem bestrahlten Bereich zu steilen örtlichen Temperaturgradienten führen.

Die Figuren 6 und 7 zeigen Möglichkeiten, wie durch geeignete Maßnahmen die Breite der heißen Zone vergrößert und der Breite der weichen Zone angenähert wird. Die Erfindung ist jedoch nicht auf die als Ausführungsbeispiele dargestellten Brenneranordnungen beschränkt. Auch andere Ausführungsformen von Wärmequellen sind geeignet, wenn sie nur in der Lage sind, die erwähnte Annäherung herbeizuführen.

**Patentansprüche**

1. Verfahren zur Herstellung einer Vorform für Glasfaser-Lichtwellenleiter mit einem Kern und einem ein- oder mehrschichtigen Mantel, bei dem das Kernglasmaterial durch chemische Niederschlagung aus der Dampfphase auf der Innenwand eines Glasrohres (1) aufgebracht, das innen beschichtete Glasrohr (1) durch Temperaturbehandlung zum Kollabieren gebracht und diese Vorform schließlich zur Glasfaser ausgezogen wird, wobei die Temperaturbehandlung zum Kollabieren längs des behandelten Glasrohrabschnittes entsprechend einem kuppenförmigen Temperaturprofil erfolgt, mit einem oberen Bereich (7) maximaler Glastemperatur (heiße Zone), welcher obere Bereich (7) ein Teil des sich oberhalb der Glaserweichungstemperatur (weiche Zone) befindlichen Teils des Temperaturprofils ist, dadurch gekennzeichnet, daß der Bereich (7) maximaler Glastemperatur ein weitgehend gleichmäßiges Temperaturniveau aufweist mit einer Breite längs des Glasrohrabschnittes, die der Breite des Bereiches (6) Glaserweichungstemperatur angenähert ist.

2. Verfahren nach Anspruch 1, dadurch gekennzeichnet, daß das Verhältnis von Breite des Bereiches (7) maximaler Glastemperatur zur Breite des Bereiches (6) Glaserweichungstemperatur 1:4 bis 1:1, vorzugsweise 1:2 bis 1:1 beträgt.

3. Verfahren nach Anspruch 1 oder 2, dadurch gekennzeichnet, daß das Temperaturprofil in seiner Breite auf die Breite des Bereiches (6) Glaserweichungstemperatur beschränkt ist.

4. Verfahren nach Anspruch 1 oder einem der folgenden, bei dem die Temperaturbehandlung mittels längs des Glasrohres (1) geführter Gasbrenner (4) erfolgt, dadurch gekennzeichnet, daß der Strömungsverlauf der Brennergase durch eine Ablenkung der Brennergase von der Oberfläche des Quarzglasrohres (1, 11) gesteuert wird.

5. Verfahren nach Anspruch 4, dadurch gekennzeichnet, daß die Steuerung die Randbereiche des Strömungsverlaufes erfaßt.

6. Verfahren nach Anspruch 5, dadurch gekennzeichnet, daß die Ablenkung der Brennergase von der Oberfläche des Quarzglasrohres (11) durch einen Zusatzgasstrom erfolgt.

7. Verfahren nach Anspruch 6, dadurch gekennzeichnet, daß der Zusatzgasstrom ein Schutzgas enthält.

8. Verfahren nach Anspruch 4, dadurch gekennzeichnet, daß die Ablenkung der Brennergase (17) von der Oberfläche des Quarzglasrohres (16) durch Absaugen der Randbereichsströmung vorgenommen wird.

9. Vorrichtung zur Durchführung der Temperaturbehandlung zum Kollabieren im Verfahren nach Anspruch 1 oder einem der folgenden mit einem längs des zu kollabierenden, innenbeschichteten Glasrohres (11) geführten Gasbrenner (10), dadurch gekennzeichnet, daß in Achsrichtung des Glasrohres (11) gesehen ein- oder beidseitig vom Brenner (10) tangential zur Vorform gerichtete Zusatzdüsen (13) zur Umlenkung der Brennergase angeordnet sind.

10. Vorrichtung zur Durchführung der Temperaturbehandlung zum Kollabieren im Verfahren nach Anspruch 1 oder einem der folgenden mit einem längs des zu kollabierenden, innenbeschichteten Glasrohres (16) geführten Gasbrenner (14, 15), dadurch gekennzeichnet, daß in Achsrichtung des Glasrohres (16) gesehen, ein- oder beidseitig vom Brenner (14, 15) Absaugeinrichtungen (18, 19) für die Brennergase (17) angeordnet sind.

11. Vorrichtung nach Anspruch 10, dadurch gekennzeichnet, daß als Absaugeinrichtungen (18, 19) für die Brennergase (17) Absaugplatten verwendet sind.

**Claims**

1. Method for producing a preform for glass-fibre optical waveguides having a core and a single-layer or multiple-layer cladding, in which the core glass material is applied onto the inner wall of a glass tube (1) by chemical vapour deposition, the internally coated glass tube (1) is made to collapse by heat treatment and this preform is finally stretched to give the glass fibre, the heat treatment for causing collapse being carried out along the glass-tube segment treated, corresponding to a domed shaped temperature profile, having an upper region (7) of maximum glass temperature (hot zone), which upper region (7) is a part of the part of the temperature profile lying above the glass-softening temperature (soft zone), characterized in that the region (7) of maximum glass temperature is at a largely uniform temperature level having a width along the glass-tube segment which is approximately equal to the width of the glass-softening temperature region (6).

2. Method according to Claim 1, characterized in that the ratio of the width of the region (7) of maximum glass temperature to the width of the glass-softening temperature region (6) is 1:4 to 1:1, preferably 1:2 to 1:1.

3. Method according to Claim 1 or 2, characterized in that the temperature profile is limited in its width to the width of the glass-softening temperature region (6).

4. Method according to Claim 1 or one of the following claims, in which the heat treatment is carried out using a gas burner (4) passed along the glass tube (1), characterized in that the course of the flow of the burner gases is controlled by deflection of the burner gases from the surface of the quartz-glass tube (1, 11).

5. Method according to Claim 4, characterized in that the controller detects the edge regions of the course of the flow.

6. Method according to Claim 5, characterized in that the deflection of the burner gases from the surface of the quartz-glass tube (11) is carried out using an additional gas stream.

7. Method according to Claim 6, characterized in that the additional gas flow contains a protective gas.

8. Method according to Claim 4, characterized in that the deflection of the burner gases (17) from the surface of the quartz-glass tube (16) is carried out by drawing off the edge-region flow.

9. Device for carrying out the heat treatment for causing collapse in the method according to Claim 1 or one of the following claims, with a gas burner (10) passed along the internally coated glass tube (11) to be caused to collapse, characterized in that, on one or both sides of the burner (10) viewed in the axial direction of the glass tube (11), additional nozzles (13) for diverting the burner gases are arranged directed tangentially to the preform.

10. Device for carrying out the heat treatment for causing collapse in the method according to Claim 1 or one of the following claims, with a gas burner (14, 15) passed along the internally coated glass tube (16) to be caused to collapse, characterized in that, on one or both sides of the burner (14, 15) viewed in the axial direction of the glass tube (16), suction devices (18, 19) for the burner gases (17) are arranged.

11. Device according to Claim 10, characterized in that suction plates are used as suction devices (18, 19) for the burner gases (17).

**Revendications**

1. Procédé de préparation d'une préforme pour fibre de verreguide d'ondes lumineuses avec un coeur et une gaine optique en une plusieurs couches, procédé dans lequel le matériau constituant le verre du coeur est appliqué sur la paroi intérieure d'un tube de verre (1) par précipitation chimique à partir de la phase vapeur, dans le cas duquel le tube de verre (1), revêtu intérieurement, est amené à s'affaisser par traitement thermique et dans le cas duquel enfin on étire cette préforme pour donner la fibre de verre, procédé dans lequel le traitement thermique pour obtenir l'affaissement se fait, le long de la portion traitée du tube de verre, selon une courbe de température en forme de dôme, avec une zone supérieure (7) de température maximale du verre (zone chaude), zone supérieure (7) qui fait partie de la partie de la courbe de température qui se trouve au-dessus de la température de ramollissement du verre (zone de ramollissement),
caractérisé par le fait que la zone (7) de température maximale du verre présente un niveau de température largement constant avec, le long de la portion du tube de verre, une largeur qui est approximativement égale à la largeur de la zone (6) de température de ramollissement du verre.

2. Procédé selon la revendication 1, caractérisé par le fait que le rapport entre la largeur de la zone (7) de température maximale du verre et la largeur de la zone (6) de température de ramollissement du verre vaut 1:4 à 1:1, de préférence 1:2 à 1:1.

3. Procédé selon la revendication 1 ou 2, caractérisé par le fait que la courbe de température a sa largeur limitée à la largeur de la zone (6) de température de ramollissement du verre.

4. Procédé selon la revendication 1 ou l'une des suivantes, dans le cas duquel le traitement thermique se fait au moyen de brûleurs à gaz (4) guidés le long du tube de verre (1), caractérisé par le fait que l'allure du flux des gaz des brûleurs est commandée par le fait que l'on fait dévier de la surface du tube en verre de quartz (1, 11) les gaz des brûleurs.

5. Procédé selon la revendication 4, caractérisé par le fait que la commande concerne les zones de bordure de l'allure du flux.

6. Procédé selon la revendication 5, caractérisé par le fait que c'est un flux de gaz supplémentaire qui fait dévier de la surface du tube en verre de quartz (11) les gaz des brûleurs.

7. Procédé selon la revendication 6, caractérisé par le fait que le flux de gaz supplémentaire contient un gaz inerte.

8. Procédé selon la revendication 4, caractérisé par le fait que c'est par aspiration du flux de la zone de bordure que l'on fait dévier de la surface du tube en verre de quartz (16) les gaz des brûleurs (17).

9. Dispositif pour la mise en oeuvre du traitement thermique pour l'affaissement dans le procédé selon la revendication 1 ou l'une des suivantes avec un brûleur à gaz (10) guidé le long du tube de verre (11) revêtu à l'intérieur, devant s'affaisser, caractérisé par le fait que, vu selon la direction axiale du tube de verre (11), sont disposées, d'un côté ou des deux côtés du brûleur (10), des buses supplémentaires (13), orientées tangentiellement à la préforme, pour opérer la déviation des gaz du brûleur.

10. Procédé pour la mise en oeuvre du traitement thermique pour l'affaissement dans le procédé selon la revendication 1 ou l'une des suivantes avec un brûleur à gaz (14, 15) guidé le long du tube de verre (16) revêtu intérieurement, qui doit s'affaisser, caractérisé par le fait que, vu selon la direction axiale du tube de verre (16), sont disposés, d'un côté ou des deux côtés du brûleur (14, 15), des dispositifs d'aspiration (18, 19) pour les gaz (17) des brûleurs.

11. Dispositif selon la revendication 10, caractérisé par le fait que comme dispositifs d'aspiration (18, 19) pour les gaz (17) du brûleur on emploie des plaques d'aspiration.

Fig.1

Fig.2

STRECKENLÄNGEN: MM

Fig.3

9

Fig.4

Fig.5

10

10

12

11

Fig.6a

13

11

13

10

Fig.6b

11

Fig.7c

Fig.7b

Fig.7a